(19) **Europäisches Patentamt**
**European Patent Office**
**Office européen des brevets**

(11) **EP 1 870 431 B1**

(12) # EUROPEAN PATENT SPECIFICATION

(45) Date of publication and mention
of the grant of the patent:
**01.06.2011 Bulletin 2011/22**

(51) Int Cl.:
**C08J 9/18** (2006.01)     **C08L 67/04** (2006.01)

(21) Application number: **06729496.7**

(22) Date of filing: **20.03.2006**

(86) International application number:
**PCT/JP2006/305528**

(87) International publication number:
**WO 2006/103970 (05.10.2006 Gazette 2006/40)**

(54) **METHOD OF PRODUCING POLYHYDROXYALKANOATE RESIN FOAMED PARTICLES**

VERFAHREN ZUR HERSTELLUNG VON GESCHÄUMTEN
POLYHYDROXYALKANOATHARZTEILCHEN

PROCEDE DE PRODUCTION DE PARTICULES EXPANSEES DE RESINE DE
POLYHYDROXYALCANOATE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **25.03.2005 JP 2005087574**

(43) Date of publication of application:
**26.12.2007 Bulletin 2007/52**

(73) Proprietor: **Kaneka Corporation
Osaka-shi, Osaka 530-8288 (JP)**

(72) Inventors:
• **HIROSE, Fuminobu c/o KANEKA
CORPORATION,
Settsu-shi, Osaka, 5660072 (JP)**

• **MIYAGAWA, Toshio c/o KANEKA
CORPORATION,
Settsu-shi, Osaka, 5660072 (JP)**
• **SENDA, Kenichi c/o KANEKA CORPORATION,
Settsu-shi, Osaka, 5660072 (JP)**

(74) Representative: **Vossius & Partner
Siebertstrasse 4
81675 München (DE)**

(56) References cited:
**JP-A- 2000 319 438     JP-A- 2003 327 737**

EP 1 870 431 B1

Printed by Jouve, 75001 PARIS (FR)

**Description**

TECHNICAL FIELD

The present invention relates to an energy-saving method of producing foamed particles of a polyhydroxyalkanoate resin of vegetable origin which exhibit biodegradability.

BACKGROUND ART

Recently, under current circumstances in which environmental issues caused by waste plastics have been focused, biodegradable plastics which are degraded after use into water and carbon dioxide by the action of a microorganism have drawn attention. In general, biodegradable plastics are generally classified into three types of: 1) microbial product-based aliphatic polyesters such as polyhydroxyalkanoate (herein, particularly poly(3-hydroxyalkanoate), i.e., P3HA); 2) chemically synthesized aliphatic polyesters such as polylactic acid and polycaprolactone; and 3) naturally occurring polymers such as starch and cellulose acetate. Many of the chemically synthesized aliphatic polyesters are constrained on degradation conditions in disposal because they are not anaerobically degraded. Polylactic acid and polycaprolactone have a problem in heat resistance. In addition, starch has problems of nonthermoplasticity, brittleness, and inferior water resistance. In contrast, P3HA has excellent characteristics such as: being excellent in degradability under any of the aerobic and anaerobic conditions; not generating toxic gas during combustion; being excellent in water resistance and anti-water vapor permeability; being a plastic derived from a microorganism assimilating a plant material; capable of having a high molecular weight without a crosslinking treatment or the like; not being increasing in carbon dioxide on the earth, i.e., being carbon neutral. Particularly, since P3HA is of plant material origin, effects contributing to measures for preventing global warming have been expected which may be involved in Kyoto Protocol because of focused attention to effects of absorbing and fixing carbon dioxide. In addition, when P3HA is a copolymer, physical properties such as melting point, heat resistance and flexibility can be altered by controlling the composition ratio of constitutive monomers.

Accordingly, molded products of polyhydroxyalkanoate have been desired which are applicable to packaging materials, materials for tableware, building materials, civil engineering materials, agricultural materials, horticultural materials, automobile interior materials, materials for adsorption, carrier and filtration, and the like because polyhydroxyalkanoate is of plant material origin and excellent in environmental compatibility, and solves problems of waste, with controllability of a wide variety of physical properties.

Sheets, films, fibers, injection-molded products and the like have been already put into commercialization of the products both domestically and abroad, using biodegradable plastics. Among plastic waste, foamed plastics which have been used for packaging containers, shock absorbers, cushioning materials and the like in large quantities have raised big social problems because of bulkiness, and thus solution thereof has been desired. Therefore, researches on foamed plastics which exhibit biodegradability have been extensively conducted. Thus far, extruded foam of aliphatic polyester-based resins, mixed resins of starch and a plastic and the like, as well as foamed particles obtained in a batch-wise manner have been studied. With respect to latter ones, those which have been conventionally studied include: foamed particles obtained using a biodegradable aliphatic polyester resin yielded by synthesis from a raw material of petroleum origin, through allowing for a diisocyanate reaction for giving a greater molecular weight for the purpose of improving the foamability (Japanese Unexamined Patent Application Publication No. Hei 6-248106); and foamed particles obtained by a crosslinking treatment (Japanese Unexamined Patent Application Publication Nos. Hei 10-324766, 2001-49021, 2001-106821, and 2001-288294).

The present inventors have also studied non-crosslinked aliphatic polyester resin foamed particles, aliphatic-aromatic polyester resin foamed particles provided through controlling the crystallinity (Japanese Unexamined Patent Application Publication Nos. 2000-319438, 2003-321568, and 2004-143269). In addition, aliphatic polyesters of plant material origin have drawn attention in recent years among aliphatic polyester-based resin foamed particles having biodegradability which have been conventionally studied, and development of P3HA resin foamed particles has been desired on the grounds as described above. The present inventors also produced foamed particles of a P3HA resin through controlling the crystallinity (Japanese Unexamined Patent Application Publication No. 2000-319438). In Japanese Unexamined Patent Application Publication No. 2000-319438, there is described a method for obtaining foamed particles having two melting points using poly(3-hydroxybutyrate-co-3-hydroxyhexanoate) (hereinafter, abbreviated as PHBH), which is a kind of P3HA, in a pressure tight container through using water as a dispersion medium, and isobutane as a foaming agent. This method requires heating up to a temperature around the melting point of PHBH for allowing PHBH to expand, whereby lots of energy must be consumed in production of the PHBH foamed particles. Moreover, higher melting point of the resulting PHBH foamed particles will be higher by at least 5°C as compared with the melting point of PHBH resin particles alone for use in the expansion. In this method of the production, it is assumed that the higher melting point is elevated because high ordering of the crystal components proceeds through the heat treatment.

When the melting point is elevated, a heat treatment at a higher temperature must be carried out in secondary molding by heating the mold using the foamed particles. Accordingly, amount of used energy increases, and a higher mold temperature prolongs the molding cycle, thereby affecting productivity. Therefore, a method for obtaining foamed particles having a low melting point has been desired. Additionally, in connection with Kyoto Protocol in which achievement level of carbon dioxide reduction was suggested, deliberation of Congress for ratification was approved in Russia in August, 2003. Therefore, it is highly probable that the Protocol will come into effect actually, whereby energy-saving industrial methods of the production have drawn a great deal of attention also in view of accomplishment of the achievement level of carbon dioxide reduction in the countries and companies. Furthermore, on the other hand, according to the conventional methods of the production in which water is used as a dispersion medium in a pressure container, compounding must be carefully perfected in the production because it is possible that water in the container may become acidic or basic hot water, which can lead to degradation of PHBH and lowering of its molecular weight, depending on the type of the compounded agents.

Moreover, the foamed particles of the present invention can be used as, for example, loose fill shock absorbers also in the form of the particles alone without subjecting to secondary molding by heating the mold. Further, by filling the foamed particles in an air-permeable or non-air-permeable pouch (preferably, biodegradable bag), an aggregate of the foamed particles which can have any freely altered shape can be also obtained, and the aggregate can be used as cushioning materials such as beads cushion, as well as shock absorbers which can be inserted in gaps while freely altering the shape. On the other hand, it can achieve excellent performances as sound absorptive material and the like. Further, the foamed particles of the present invention can be used as particles for controlling drug-sustained release through mixing with a sustained release drug.

DISCLOSURE OF THE INVENTION

An object of the present invention is to provide an easy-to-use, energy-saving and economical method for producing resin foamed particles being excellent in environmental compatibility by using an ether, which generates neither sulfur oxide nor soot and enables considerable reduction in nitrogen oxide generation during combustion, and further using a resin of vegetable origin and which contributes to the carbon dioxide fixing.

The present inventors elaborately investigated for solving the problems described above, and consequently found that when an ether is used as a foaming agent for P3HA, foamed particles having a low melting point are obtained, and controllability of the melting point and productivity can be enhanced. Accordingly, the present invention was accomplished.

That is, the first aspect of the present invention relates to a method of producing P3HA resin foamed particles comprising the steps of: feeding resin particles which comprise a copolymer having recurring monomer units represented by the general formula (1):

$$[-CHR-CH_2-CO-O-] \qquad (1)$$

(wherein R is an alkyl group represented by $C_nH_{2n+1}$; and n is an integer of 1 to 15) produced from a microorganism (hereinafter, referred to as poly(3-hydroxyalkanoate): abbreviated as P3HA), and a foaming agent into an airtight container; and expanding the resin particles by heating to a temperature not lower than the softening temperature of the Poly(3-hydroxyalkanoate) resin particles and not higher than the temperature at which the particles are molten and fused, followed by opening one end of the airtight container so as to release the resin particles into an atmosphere with a pressure lower than the pressure in the airtight container to obtain the foamed particles, the foaming agent being at least one selected from the group consisting of dimethyl ether, diethyl ether, and methyl ethyl ether.

In a preferable embodiment, the present invention relates to a method of producing P3HA resin foamed particles characterized in that P3HA is poly(3-hydroxybutyrate-co-3-hydroxyhexanoate) including a recurring monomer unit in which n is 1 and 3. More preferably, the present invention relates to a method of producing P3HA resin foamed particles wherein composition ratio of copolymerizing components of poly(3-hydroxybutyrate-co-3-hydroxyhexanoate) is poly(3-hydroxybutyrate)/poly(3-hydroxyhexanoate) = 99/1 to 80/20 (molar ratio), and more preferably, relates to a method of producing P3HA resin foamed particles wherein the foaming agent is dimethyl ether.

In a preferable embodiment, the present invention relates to the method of producing P3HA resin foamed particles wherein the P3HA resin foamed particles have a crystal structure with two or more melting points on a DSC curve according to a differential scanning calorimetry method, and provided that the melting point thereof on the highest-temperature side is defined as $Tm^1$ and that the melting point on the highest-temperature side as measured by the same differential scanning calorimetry method on the P3HA resin alone prior to the expansion is defined as $Tm^2$, $Tm^2$ follow the relationship of: $Tm^1 \leq Tm^2 + 5°C$, wherein the DSC curve is obtained by elevating the temperature from 0°C to 200°C at a rate of temperature rise of 10 °C/min with a differential scanning calorimeter.

BEST MODE FOR CARRYING OUT THE INVENTION

The present invention will be explained in more detail below. Poly(3-hydroxyalkanoate) (hereinafter, referred to as P3HA) is an aliphatic polyester that has a repeat structure consisting of 3-hydroxyalkanoate represented by the general formula (1):

$$[-CHR-CH_2-CO-O-] \qquad (1)$$

(wherein R is an alkyl group represented by $C_nH_{2n+1}$; and n is an integer of from 1 to 15), and that is produced from a microorganism.

Exemplary P3HA may be a homopolymer of the aforementioned 3-hydroxyalkanoate, or a copolymer prepared from a combination of two or more thereof such as di-copolymer, tri-copolymer, tetra-copolymer or the like, or a blend of two or more selected from these homopolymers, copolymers and the like. Among them, those which can be preferably used include homopolymers such as 3-hydroxybutyrate having n of 1, 3-hydroxyvalylate having n of 2, 3-hydroxyhexanoate having n of 3, 3-hydroxyoctanoate having n of 5, and 3-hydroxyoctadecanoate having n of 15 or copolymers (di-copolymers, tri-copolymers) constituted with a combination of two or more of these 3-hydroxyalkanoate units, or blends of the same. Among these, P3HA is more preferably poly(3-hydroxybutyrate-co-3-hydroxyhexanoate) that is a copolymer of 3-hydroxybutyrate having n of 1 and 3-hydroxyhexanoate having n of 3, in light of a comparably wide range of the temperature applicable in the thermal processing. Further, the composition ratio is preferably 3-hydroxybutyrate/3-hydroxyhexanoate = 99/1 to 80/20 (molar ratio), more preferably 3-hydroxybutyrate/3-hydroxyhexanoate = 98/2 to 82/18 (molar ratio), and still more preferably 3-hydroxybutyrate/3-hydroxyhexanoate = 98/2 to 85/15 (molar ratio). When the composition ratio of 3-hydroxybutyrate/3-hydroxyhexanoate exceeds 99/1, less difference in melting point is present from the melting point of polyhydroxybutyrate that is the homopolymer, whereby a thermal processing at a high temperature is needed, which tends to lead to striking lowering of the molecular weight due to thermal degradation during the thermal processing, resulting in difficulty in controlling the quality. In addition, when the composition ratio of 3-hydroxybutyrate/3-hydroxyhexanoate is less than 80/20, productivity is likely to be deteriorated because a long period of time is required for recrystallization in the thermal processing.

Weight average molecular weight (Mw) of the aforementioned P3HA is preferably equal to or greater than 50,000, and more preferably equal to or greater than 100,000. When the weight average molecular weight is less than 50,000, favorable foam is not likely to be obtained due to breakage of foamed cells because melt tension of the resin cannot withstand the expanding force in the expansion according to the present method of production. In addition, although upper limit of the weight average molecular weight is not particularly limited, it is preferably equal to or less than 20,000,000, and more preferably equal to or less than 2,000,000. The weight average molecular weight referred to herein means a weight average molecular weight (Mw) derived by molecular weight distribution measurement in terms of polystyrene with determination by gel permeation chromatography (GPC) using a chloroform eluent.

In the present invention, an ether foaming agent is used. As the ether-based foaming agent, one or more ethers selected from the group consisting of dimethyl ether, diethyl ether, and methyl ethyl ether are used and dimethyl ether is preferably used. Dimethyl ether is accompanied by less environmental burden because it generates neither sulfur oxide nor soot, and enables considerable reduction in nitrogen oxide formation. Thus, it has come into use as a material with high environmental compatibility, which is available in a variety of applications such as fuel for diesel powered automobile, fuel for generation of electricity fuel, alternative fuel for LP gas and the like. Since ethers have potent plasticizing performance and expanding force against P3HA resins, foams can be readily obtained at a comparably low foaming temperature. As compared with isobutane that is a commonly and frequently used foaming agent, use of the ether-based foaming agent enables lowering of the foaming temperature, which permits to obtain favorable foamed particles, by approximately several ten degrees Celsius, thereby allowing for expansion at a low temperature. Because P3HA is not subjected to a heat treatment at around the melting point owing the expansion effected at a low temperature, foamed particles having a low melting point can be obtained.

The adding amount of foaming agent varies depending on intended expansion ratio of foamed particles, foaming temperature, spacial volume of the airtight container and the like, but in general it is preferably 2 to 10000 parts by weight, more preferably 5 to 5000 parts by weight, and still more preferably 10 to 1000 parts by weight per 100 parts by weight of the resin particles. When the amount of the foaming agent is less than 2 parts by weight, sufficient expansion ratio may not be achieved. In contrast, when the amount of the foaming agent exceeds 10000 parts by weight, an effect to meet the added amount may not be achieved, which may lead to economic waste.

To P3HA in the present invention may be added various additives in the range not to impair the required performances of the resulting foamed particles. Exemplary additives may include e.g., antioxidants, ultraviolet absorbing agents, colorants such as dyes and pigments, plasticizers, lubricants, crystallization nucleating agents, inorganic fillers, and the like. These can be used depending on the intended use, but among all, additives which exhibit biodegradability are preferred. Examples of the additive include inorganic compounds such as silica, talc, calcium silicate, wollastonite, kaolin, clay, mica, zinc oxide, titanium oxide and silicon oxide, fatty acid metal salts such as sodium stearate, magnesium stearate, calcium stearate and barium stearate, liquid paraffin, olefin-based wax, stearylamide-based compounds and the like, but not limited thereto. Moreover, when regulation of the cell diameter of the foamed particles is needed, a cell regulator is added. As the cell regulator, inorganic agents such as talc, silica, calcium silicate, calcium carbonate, aluminum oxide, titanium oxide, diatomaceous earth, clay, sodium bicarbonate, alumina, barium sulfate, aluminum oxide, bentonite and the like may be exemplified. The cell regulator may be added in an amount of usually 0.005 to 2 parts by weight per 100 parts by weight of the resin.

The method of producing P3HA resin foamed particles according to the present invention will be described below. For the P3HA resin foamed particles of the present invention, P3HA resin particles are used which were produced by heat fusion and kneading of a P3HA resin as a base resin with an extruder, a kneader, a banbury mixer, a roll or the like first, and then molding into a particle shape which can be readily utilized in the method of producing the foamed particles of the present invention such as a cylindrical, elliptic cylindrical, spherical, cubic, or rectangular prism shape. The weight of one particle is preferably not less than 0.1 mg, and more preferably not less than 0.5 mg. Although the upper limit is not particularly limited, the weight is preferably not greater than 10 mg. When the weight is less than 0.1 mg, production of the P3HA resin particle itself may be difficult.

Thus resulting P3HA resin particles are fed into an airtight container together with the foaming agent. In some cases, they are fed together with a dispersant and a dispersion medium. The P3HA resin foamed particles are produced by heating to a temperature not lower than the softening temperature of the P3HA resin particles and not higher than the temperature at which they get into a completely amorphous state (in other words, temperature at which the particles are molten and fused) in the airtight container; keeping the mixture at around a temperature to allow for expansion for a given period of time if necessary (referred to as holding time); and opening one end of the airtight container so as to release the resin particles to an atmosphere with a pressure lower than the pressure in the airtight container.

The temperature and pressure in the airtight container may be selected appropriately depending on type of the used resin particles and foaming agent, and for example, it is preferred that the temperature is not higher than the melting point of the used resin particles, and the pressure is at least 0.5 MPa or higher.

In the method of production according to the present invention, water (hot water) or the like may be used as a heating medium in the airtight container, however, in this case, influence of the dispersant or basicity resulting from the various additives described above upon dissolving in water must be considered. Under conditions other than in neutral hot water, hydrolysis of P3HA may be markedly accelerated. Therefore, an ether that is a foaming agent may be preferably used as a heating medium directly, or a medium that is economical and excellent in handling characteristics but does not act on the additive may be used through selecting appropriately. Although it may vary depending on the type of the dispersion medium, the dispersant may be an inorganic substance such as tribasic calcium phosphate, calcium pyrophosphate, kaolin, basic magnesium carbonate, aluminum oxide or basic zinc carbonate, and an anionic surfactant such as e.g., sodium dodecylbenzene sulfonate, sodium $\alpha$-olefin sulfonate, sodium n-paraffin sulfonate or the like which may be used in combination.

In addition, it is preferred that the P3HA foamed particles obtained by the method of production of the present invention have a crystal structure with two or more melting points on a DSC curve according to a differential scanning calorimetry method, and provided that the melting point thereof on the highest-temperature side is defined as $Tm^1$ and that the melting point on the highest-temperature side as measured by the same differential scanning calorimetry method on the P3HA resin alone prior to the expansion is defined as $Tm^2$, $Tm^2$ is not higher than $Tm^2 + 5°C$.

The differential scanning calorimetry method of the P3HA resin foamed particles of the present invention is carried out according to, for example, a method disclosed in Japanese Unexamined Patent Application Publication No. S59-176336, No. S60-49040 and the like, in which a DSC curve is obtained by elevating the temperature from 0°C to 200°C at a rate of temperature rise of 10°C/min with a differential scanning calorimeter. The melting point referred to herein means a temperature of the peak on an endothermic curve on the DSC curve in elevation of the temperature. When the P3HA resin foamed particles having a crystal structure with two or more melting points on the DSC curve are filled in a mold to perfect molding, a molded product with favorable physical properties is obtained under molding conditions which may fall within wide ranges. The difference between the two melting points is preferably equal to or greater than 2°C, and more preferably equal to or greater than 10°C. As the difference in the melting point temperatures is greater, more favorable formability can be achieved. Additionally, according to the method of producing P3HA resin foamed particles of the present invention in which an ether is used as the foaming agent, expansion of the P3HA resin particles is enabled at a low temperature (low thermal energy) by the plasticizing action of the ether, and the melting point ($Tm^2$) of the P3HA resin particles becomes almost the same as the melting point ($Tm^1$) of the P3HA resin foamed particles, leading to the relationship of $Tm^1 \leq Tm^2 + 5°C$. Enabling the expansion at a low temperature as in the present invention means that foaming can be executed with a low thermal energy, leading to energy-saving and eventually reduction in carbon dioxide, and thus the effect of preventing global warming is expected.

Thus resulting P3HA resin foamed particles have an expansion ratio of preferably 2 to 80 times, and more preferably 5 to 60 times. When the expansion ratio is less than two times, effects of weight saving and thermal insulation properties being the characteristics of foamed products are hardly achieved. In contrast, when the ratio exceeds 80 times, the molding can be carried out under only extremely limited heat molding conditions.

The P3HA resin foamed particles obtained by the method described above can be used directly for applications such as packaging materials, materials for tableware, building materials, civil engineering materials, agricultural materials, horticultural materials, automobile interior materials, materials for adsorption, carrier and filtration, and the like. If necessary, the foamed particles are filled in a mold which can be closed but not airtightly, in which they are compressed with compression air to increase the inner pressure. Subsequently, water vapor is fed into the mold, and the thermoplastic polyester-based resin foamed particles are heated and fused with each other to produce a foamed and molded product of the thermoplastic polyester-based resin foamed particles.

Examples

The present invention will be explained in more detail by way of illustrative Examples below, but the present invention is not anyhow limited to these Examples. In Examples, "part" is based on the weight. Materials used in the present invention are abbreviated as in the following:

PHBH: poly(3-hydroxybutyrate-co-3-hydroxyhexanoate)
HH rate: molar fraction (mol%) of hydroxyhexanoate in PHBH
Dimethyl ether: DME
Measurement of physical properties of the P3HA resin foamed particles in each Example were carried out as follows.

Expansion Ratio of P3HA Resin Foamed Particles

A graduated cylinder charged with ethanol at 23°C was provided, and into the graduated cylinder were placed 500 or more foamed particles (weight of the group of the foamed particles: W (g)), which had been left to stand under a condition with relative humidity of 50%, at 23°C and 1 atm for 7 days so as to allow them to submerge using a wire mesh or the like. Provided that the volume of the foamed particles read from the elevated ethanol level rise is defined as $V(cm^3)$, the expansion ratio is determined with a resin density $\rho$ $(g/cm^3)$ according to the following formula:

$$\text{expansion ratio} = V/(W/\rho).$$

Melting Point, Its Peak Number and Temperature Difference of P3HA Resin Particles and Foamed Particles

Differential scanning calorimetry was performed by precisely weighing about 5 mg of the P3HA resin particles, elevating the temperature from 0°C to 200°C at a rate of temperature rise of 10°C/min with a differential scanning calorimeter (manufactured by Seiko Electronics Co., Ltd., SSC5200) to obtain a DSC curve. Accordingly, the peak temperature on the endothermic curve was defined as the melting point $Tm^2$ (when multiple melting points are present, the peak of the highest temperature is selected). A melting point $Tm^1$ of the foamed particles was similarly determined. Additionally, the peak number was also counted.

Productivity of P3HA Resin Foamed Particles

Energy-saving property of the foamed particles was evaluated according to the following standards:

A: heating temperature of the pressure-tight, airtight container in production of the foamed particles being equal to or lower than 100°C; and
B: heating temperature of the pressure-tight, airtight container in production of the foamed particles being higher than 100°C.

Biodegradability of Resin

Six months after burying the P3HA resin foamed particles 10 cm under the ground, change in the shape was observed to evaluate the degradability according to the following standards:

A: substantial part degraded to the extent that the shape can be hardly observed; and
C: foamed particles identified with almost no change in the shape, showing no degradation.

Example 1

PHBH (PHBH (Mw = 530,000) having an HH rate of 10% by mole) produced using as a microorganism Alcaligenes eutrophus AC32 (Accession No. FERM BP-6038 (transferred from original deposit (FERM P-15786) deposited on August 12, 1996), dated August 7, 1997, National Institute of Advanced Industrial Science and Technology, International Patent Organism Depositary, address: Tsukuba Central 6, 1-1-1 Higashi, Tsukuba, Ibaraki, Japan; J. Bacteriol., 179, 4821 (1997)), which had been prepared by introducing a PHA synthase gene derived from Aeromonas caviae into Alcaligenes eutrophus, through arbitrarily adjusting the raw material and culture conditions was melt-kneaded in an extrusion molding machine having a $\phi$ 35 mm single screw (manufactured by Kasamatsu Kako Kenkyusho Inc., universal extruder for laboratory use) equipped with a kneader at a cylinder temperature of 135°C, and the strand extruded through a small die opening of 3 mm $\phi$ attached to the extruder tip was cut by a pelletizer to produce PHBH resin particles A (Mw = 450,000) having a particle weight of 5 mg. After charging 100 parts by weight of the resin particles A into a 10 L pressure-tight container, 200 parts by weight of DME as the foaming agent was added thereto and stirred. After elevating the temperature such that the internal temperature of the container became 90°C (to give foaming temperature), the container was kept in a state with the internal pressure of the container being 2.5 MPa for 1 hour. Then, the mixture was released to an ambient pressure to permit expansion by passing through a nozzle with a small hole provided at the bottom of the pressure tight container. Accordingly, PHBH resin foamed particles B having an expansion ratio of 10 times, and having a crystal structure with two melting points (133°C ($Tm^1$), 114°C) on the DSC curve according to the differential scanning calorimetry method were obtained. Moreover, non-foamed PHBH resin particles A had two melting points (131°C ($Tm^2$), 119°C) on the DSC curve according to the differential scanning calorimetry method. The PHBH foamed particles B satisfied the relationship of $Tm^1 \leq Tm^2 + 5°C$. They could be expanded at a lower temperature of 90°C (lower energy), as compared with Comparative Example 2, and foamed particles having a lower temperature melting point could be obtained. Additionally, this resin exhibited favorable biodegradability. The results are shown in Table 1.

Table 1

| | Example 1 | Compar. Example 1 | Compar. Example 2 | Example 2 | Compar. Example 3 | Compar. Example 4 |
|---|---|---|---|---|---|---|
| P3HA species | PHBH | PHBH | PHBH | PHBH | PHBH | PHBH |
| HH rate (% by mole) | 10 | 10 | 10 | 7 | 7 | 7 |
| P3HA amount (part) | 100 | 100 | 100 | 100 | 100 | 100 |
| Foaming agent species | DME | isobutane | isobutane | DME | isobutane | isobutane |
| Foaming agent amount (part) | 200 | 200 | 200 | 200 | 200 | 200 |
| Foaming temperature (°C) | 90 | 90 | 145 | 100 | 100 | 158 |
| Productivity of P3HA resin foamed particles | A | foamed particles not produced | B | A | foamed particles not produced | B |
| Expansion ratio (time) | 10 | unfoamed | 2 | 12 | unfoamed | 5 |
| Melting point of foamed particles $Tm^1$ (°C) | 133 | 131 | 142 | 144 | 143 | 157 |
| Melting point of resin $Tm^2$ (°C) | 131 | 131 | 131 | 142 | 142 | 142 |
| Number of melting points | 2 | 2 | 2 | 2 | 2 | 2 |

(continued)

|  | Example 1 | Compar. Example 1 | Compar. Example 2 | Example 2 | Compar. Example 3 | Compar. Example 4 |
|---|---|---|---|---|---|---|
| P3HA species | PHBH | PHBH | PHBH | PHBH | PHBH | PHBH |
| Difference in temperatures $Tm^1$ and $Tm^2$ | A | A |  | A | A |  |
| Biodegradability of P3HA | A | A | A | A | A | A |

Comparative Example 1

Expansion was attempted in a similar manner to Example 1 except that 200 parts by weight of isobutane was used as the foaming agent, and the internal pressure of the container was 1.6 MPa. As a result, resin particles C were obtained which did not expand at all at a heating temperature of 90°C. Thus resulting resin particles C had two melting points (131°C ($Tm^1$), 120°C) on the DSC curve according to the differential scanning calorimetry method. As compared with the resin particles A, although they satisfied the relationship of $Tm^1 \leq Tm^2 + 5°C$, softening of the resin failed due to lack in plasticizing ability of isobutane like DME, whereby the non-foamed PHBH resin particles C were produced. Furthermore, this resin exhibited a favorable biodegradability. The results are shown in Table 1.

Comparative Example 2

Foamed particles D were obtained in a similar manner to Example 1 except that 200 parts by weight of isobutane was used as the foaming agent; the heating temperature was 145°C; and the internal pressure of the container was 3.9 MPa. The foamed particles D exhibited an expansion ratio of two times, and had a crystal structure with two melting points (142°C ($Tm^1$), 123°C) on the DSC curve according to the differential scanning calorimetry method. The PHBH foamed particles D satisfied the relationship of $Tm^1 > Tm^2 + 5°C$, and thus the foamed particles could not be obtained unless the material was expanded at a higher temperature of 145°C (higher energy), as compared with Example 1. Moreover, the expansion ratio was also low. In addition, this resin exhibited a favorable biodegradability. The results are shown in Table 1.

Example 2

PHBH (PHBH (Mw = 720,000) having an HH rate of 7% by mole) produced using as a microorganism Alcaligenes eutrophus AC32 (Accession No. FERM BP-6038 (transferred from original deposit (FERM P-15786) deposited on August 12, 1996), dated August 7, 1997, National Institute of Advanced Industrial Science and Technology, International Patent Organism Depositary, address: Tsukuba Central 6, 1-1-1 Higashi, Tsukuba, Ibaraki, Japan; J. Bacteriol., 179, 4821 (1997)), which hade been prepared by introducing a PHA synthase gene derived from Aeromonas caviae into Alcaligenes eutrophus, through appropriately adjusting the raw material and culture conditions was melt-kneaded in an extrusion molding machine having a $\phi$ 35 mm single screw (manufactured by Kasamatsu Kako Kenkyusho Inc., universal extruder for laboratory use) equipped with a kneader at a cylinder temperature of 145°C, and the strand extruded through a small die opening of 3 mm $\phi$ attached to the extruder tip was cut by a pelletizing machine to produce PHBH resin particles E (Mw = 570,000) having a particle weight of 5 mg. After charging 100 parts by weight of the resin particles E into a 10 L pressure-tight container, 200 parts by weight of DME as the foaming agent was added thereto and stirred. After elevating the temperature such that the internal temperature of the container became 100°C (to give foaming temperature), the container was kept in a state with the internal pressure of the container being 3.3 MPa for 1 hour. Then, the mixture was released to an ambient pressure to permit expansion by passing through a nozzle with a small hole provided at the bottom of the pressure-tight container. Accordingly, PHBH resin foamed particles F having an expansion ratio of 12 times, and having a crystal structure with two melting points (144°C ($Tm^1$), 127°C) on the DSC curve according to the differential scanning calorimetry method were obtained. Moreover, unfoamed PHBH resin particles E had two melting points (142°C ($Tm^2$), 128°C) on the DSC curve according to the differential scanning calorimetry method. The PHBH foamed particles E satisfied the relationship of $Tm^1 \leq Tm^2 + 5°C$. They could be expanded at a lower temperature of 100°C (lower energy), as compared with Comparative Example 4, and foamed particles having a lower temperature melting point could be obtained. Additionally, this resin exhibited favorable biodegradability. The results are shown in Table 1.

Comparative Example 3

Expansion was attempted in a similar manner to Example 2 except that 200 parts by weight of isobutane was used as the foaming agent, and the internal pressure of the container was 1.9 MPa. As a result, resin particles G were obtained which did not expand at all at a heating temperature of 100°C. Thus resulting resin particles G had two melting points (143°C ($Tm^1$), 125°C) on the DSC curve according to the differential scanning calorimetry method. As compared with the resin particles E, although they satisfy the relationship of $Tm^1 \leq Tm^2 + 5°C$, softening of the resin failed due to lack in plasticizing ability of isobutane like DME, whereby the unfoamed PHBH resin particles G were produced. Furthermore, this resin exhibited a favorable biodegradability. The results are shown in Table 1.

Comparative Example 4

Foamed particles H were obtained in a similar manner to Example 1 except that 200 parts by weight of isobutane was used as the foaming agent; the heating temperature was 158°C; and the internal pressure of the container was 4.7 MPa. The foamed particles H exhibited an expansion ratio of five times, and had a crystal structure with two melting points (157°C ($Tm^1$), 123°C) on the DSC curve according to the differential scanning calorimetry method. The PHBH foamed particles H indicated the relationship of $Tm^1 > Tm^2 + 5°C$, and thus the foamed particles could not be obtained unless the material was expanded at a higher temperature of 158°C (higher energy), as compared with Example 2. Moreover, the expansion ratio was also low. In addition, this resin exhibited a favorable biodegradability. The results are shown in Table 1.

Example 3

The PHBH foamed particles obtained in Example 1 were fed into a mold together with water vapor of 0.07 to 0.10 MPa (gauge pressure: corresponding to 115 to 120°C). The foamed particles were heated and fused with each other, and thus an in-mold foamed and molded product could be obtained.

INDUSTRIAL APPLICABILITY

According to the present invention, resin foamed particles of vegetable origin which are excellent in environmental compatibility as well as in heat resistance and water resistance, which are difficult to achieve with the naturally occurring polymer such as chemically synthesized aliphatic polyester and starch described above, can be obtained. Additionally, compositions and molded products which return to carbon recycling system on the earth are obtained through degradation by the action of a microorganism or the like under any of aerobic and anaerobic conditions in the course of disposal. Furthermore, provided are compositions and molded products of vegetable origin which are obtained by positively fixing carbon dioxide around the earth, whereby prevention of global warming is expected. Moreover, an easy-to-use and economical method of production can be provided in terms of the step for producing foamed particles.

**Claims**

1. A method of producing poly(3-hydroxyalkanoate) resin foamed particles comprising the steps of: feeding resin particles which comprise a copolymer, poly(3-hydroxyalkanoate), having repeating monomer units represented by the general formula (1):

$$[-CHR-CH_2<O-O-] \qquad (1)$$

(wherein R is an alkyl group represented by $C_nH_{2n+1}$; and n is an integer of 1 to 15) produced from a microorganism, and a foaming agent into an airtight container; and expanding the resin particles by heating to a temperature not lower than the softening temperature of the poly(3-hydroxyalkanoate) resin particles and not higher than the temperature at which the particles are molten and fused, followed by opening one end of the airtight container so as to release the resin particles to an atmosphere with a pressure lower than the pressure in the airtight container to obtain the foamed particles,
the foaming agent being at least one selected from the group consisting of dimethyl ether, diethyl ether, and methyl ethyl ether.

2. The method of producing poly(3-hydroxyalkanoate) resin foamed particles according to claim 1 wherein the poly(3-hydroxyalkanoate) is poly(3-hydroxybutyrate-co-3-hydroxyhexanoate) including a repeating monomer unit in which n is 1 and 3.

3. The method of producing poly(3-hydroxyalkanoate) resin foamed particles according to claim 2 wherein composition ratio of copolymerizing components of the poly(3-hydroxybutyrate-co-3-hydroxyhexancate) is poly(3-hydroxybutyrate)/poly(3-hydroxyhexanoate) = 99/1 to 80/20 (molar ratio).

4. The method of producing poly(3-hydroxyalkanoate) resin foamed particles according to any one of claims 1 to 3 wherein the foaming agent is dimethyl ether.

5. The method of producing poly(3-hydroxyalkanoate) resin foamed particles according to any one of claims 1 to 4 wherein the poly(3-hydroxyalkanoate) resin foamed particles have a crystal structure with two or more melting points on a DSC curve according to a differential scanning calorimetry method, and provided that the melting point thereof on the highest-temperature side is defined as $Tm^1$ and that the melting point on the highest-temperature side as measured by the same differential scanning calorimetry method on the poly(3-hydroxyalkanoate) resin alone prior to the expansion is defined as $Tm^2$, $Tm^2$ follows the relationship of: $Tm^1 \leq Tm^2 + 5°C$, wherein the DSC curve is obtained by elevating the temperature from 0 °C to 200 °C at a rate of temperature rise of 10 °C/min with a differential scanning calorimeter.

**Patentansprüche**

1. Ein Verfahren zur Herstellung von geschäumten Poly(3-hydroxyalkanoat)harzteilchen umfassend die Schritte:

Zuführen von Harzteilchen, welche ein Copolymer, Poly(3-hydroxyalkanoat), umfassen, das sich wiederholende Monomereinheiten, dargestellt durch die allgemeine Formel (1), aufweist:

$$[-CHR-CH_2-CO-O-] \qquad (1)$$

(wobei R ein Alkylrest, dargestellt durch $C_nH_{2n+1}$, ist; und n eine ganze Zahl von 1 bis 15 ist) und das durch einen Mikroorganismus hergestellt wurde und einem Schäummittel in einen luftdichten Behälter; und Expandieren der Harzteilchen durch Erwärmen bei einer Temperatur, die nicht geringer als die Erweichungstemperatur der Poly(3-hydroxyalkanoat)harzteilchen und nicht höher als die Temperatur, bei der die Teilchen flüssig und zusammengeschmolzen sind, ist, gefolgt von Öffnen des luftdichten Behälters an einem Ende, um die Harzteilchen einer Atmosphäre mit einem geringeren Druck als dem Druck im luftdichten Behälter auszusetzen, um die geschäumten Teilchen zu erhalten,
wobei das Schäummittel mindestens eines ist, das aus der Gruppe bestehend aus Dimethylether, Diethylether und Methylethylether ausgewählt ist.

2. Das Verfahren zur Herstellung von geschäumten Poly(3-hydroxyalkanoat)harzteilchen gemäß Anspruch 1, wobei das Poly(3-hydroxyalkanoat) ein Poly(3-hydroxybutyrat-co-3-hydroxyhexanoat) ist, welches eine sich wiederholende Monomereinheit enthält, in welcher n 1 und 3 ist.

3. Das Verfahren zur Herstellung von geschäumten Poly(3-hydroxyalkanoat)harzteilchen gemäß Anspruch 2, wobei das Zusammensetzungsverhältnis der copolymerisierenden Komponenten des Poly(3-hydroxybutyrat-co-3-hydroxyhexanoats) Poly(3-hydroxybutyrat)/Poly(3-hydroxyhexanoat) = 99/1 bis 80/20 (molares Verhältnis) ist.

4. Das Verfahren zur Herstellung von geschäumten Poly(3-hydroxyalkanoat)harzteilchen gemäß einem der Ansprüche 1 bis 3, wobei das Schäummittel Dimethylether ist.

5. Das Verfahren zur Herstellung von geschäumten Poly(3-hydroxyalkanoat)harzteilchen gemäß einem der Ansprüche 1 bis 4, wobei die geschäumten Poly(3-hydroxyalkanoat)harzteilchen eine Kristallstruktur mit zwei oder mehr Schmelzpunkten auf einer DSC-Kurve gemäß einem Differentialscanningkalorimetrie-Verfahren besitzen, und mit der Maßgabe, dass der Schmelzpunkt davon bei der höchsten Temperaturseite als $Tm^1$ definiert ist und dass der Schmelzpunkt bei der höchsten Temperaturseite, gemessen durch das selbe Differentialscanningkalorimetrie-Verfahren, bei dem Poly(3-hydroxyalkanoat)harz alleine vor der Expansion als $Tm^2$ definiert ist, $Tm^2$ der Beziehung: $Tm^1 \leq Tm^2 + 5°C$ folgt, wobei die DSC-Kurve durch Erhöhen der Temperatur von 0°C auf 200°C bei einer Rate der Temperaturerhöhung von 10 °C/min mit einem Differentialscannigkalorimeter erhalten wird.

**Revendications**

1. Procédé de production de particules expansées de résine de poly(3-hydroxyalcanoate) comprenant les étapes consistant :

   à introduire des particules de résine qui comprennent un copolymère, poly(3-hydroxyalcanoate), présentant des unités monomères répétitives représentées par la formule générale (1) :

   $$[-CHR-CH_2-CO-O-] \qquad (1)$$

   (dans laquelle R est un groupe alkyle représenté par $C_nH_{2n+1}$ ; et n est un nombre entier de 1 à 15) produit à partir d'un microorganisme, et un agent moussant dans un récipient étanche à l'air ; et à expanser les particules de résine en chauffant à une température qui n'est pas inférieure à la température de ramollissement des particules de résine de poly(3-hydroxyalcanoate) et qui n'est pas supérieure à la température à laquelle les particules fondent et sont en fusion, à ouvrir ensuite une extrémité du récipient étanche à l'air afin de libérer les particules de résine dans une atmosphère présentant une pression inférieure à la pression dans le récipient étanche à l'air pour obtenir les particules expansées,
   l'agent moussant étant au moins un choisi dans le groupe constitué du diméthyléther, du diéthyléther et du méthyléthyléther.

2. Procédé de production de particules expansées de résine de poly(3-hydroxyalcanoate) selon la revendication 1, dans lequel le poly(3-hydroxyalcanoate) est le poly(3-hydroxybutyrate-co-3-hydroxyhexanoate) comprenant une unité monomère répétitive dans laquelle n est égal à 1 et à 3.

3. Procédé de production de particules expansées de résine de poly(3-hydroxyalcanoate) selon la revendication 2, dans lequel le rapport de composition des constituants de copolymérisation du poly(3-hydroxybutyrate-co-3-hydroxyhexanoate) est poly(3-hydroxybutyrate)/ poly(3-hydroxyhexanoate) = 99/1 à 80/20 (rapport molaire).

4. Procédé de production de particules expansées de résine de poly(3-hydroxyalcanoate) selon l'une quelconque des revendications 1 à 3 dans lequel l'agent moussant est le diméthyléther.

5. Procédé de production de particules expansées de résine de poly(3-hydroxyalcanoate) selon l'une quelconque des revendications 1 à 4, dans lequel les particules expansées de résine de poly(3-hydroxyalcanoate) présentent une structure cristalline avec deux ou plusieurs points de fusion sur une courbe DSC selon un procédé de calorimétrie différentielle, et à condition que le point de fusion de celles-ci sur le côté de la température la plus élevée est défini par $Tm^1$ et que le point de fusion sur le côté de la température la plus élevée comme mesuré par le même procédé de calorimétrie différentielle sur la résine de poly(3-hydroxyalcanoate) seule avant l'expansion est défini par $Tm^2$, $Tm^2$ suit la relation : $Tm^1 \leq Tm^2 + 5°C$, dans lequel la courbe DSC est obtenue par augmentation de la température de 0°C à 200°C à une vitesse d'élévation de la température de 10°C/min avec un calorimètre différentiel.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI6248106 B
- JP HEI10324766 B
- JP 2001049021 A
- JP 2001106821 A
- JP 2001288294 A

- JP 2000319438 A
- JP 2003321568 A
- JP 2004143269 A
- JP S59176336 B
- JP S6049040 B

**Non-patent literature cited in the description**

- *J. Bacteriol.,* 1997, vol. 179, 4821